(19) Europäisches Patentamt / European Patent Office / Office européen des brevets

(11) **EP 4 757 250 A1**

(12) **DEMANDE DE BREVET EUROPEEN**

(43) Date de publication:
**10.06.2026 Bulletin 2026/24**

(21) Numéro de dépôt: **25220985.3**

(22) Date de dépôt: **05.12.2025**

(51) Classification Internationale des Brevets (IPC):
*H04L 9/40* (2022.01)  *G06F 9/50* (2006.01)
*H04L 67/51* (2022.01)  *H04L 41/0806* (2022.01)
*H04L 41/0894* (2022.01)  *H04L 41/122* (2022.01)
*H04L 41/5041* (2022.01)  *H04L 41/40* (2022.01)
*H04L 41/0895* (2022.01)

(52) Classification Coopérative des Brevets (CPC):
**H04L 63/20; G06F 9/5077; H04L 41/0806;
H04L 41/0894; H04L 41/122; H04L 41/5041;
H04L 67/51;** H04L 41/0895; H04L 41/40

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **06.12.2024 FR 2413577**

(71) Demandeur: **THALES**
**92190 Meudon (FR)**

(72) Inventeurs:
• **Ayed, Dhouha**
**91767 PALAISEAU (FR)**
• **Cailliot, Louis**
**91767 PALAISEAU (FR)**
• **Dangerville, Cyril**
**91767 PALAISEAU (FR)**

(74) Mandataire: **Lavoix**
**2, place d'Estienne d'Orves**
**75441 Paris Cedex 09 (FR)**

(54) **PROCÉDÉ, ET PLATEFORME, D ORCHESTRATION DE SÉCURITÉ FÉDÉRÉE**

(57) L'invention concerne une solution d'orchestration multi-domaine de sécurité distribuée, fédérée et dynamique permettant l'application par traduction automatique d'un accord contractuel de niveau de sécurité (SSLA) efficace en cas d'interopérabilité multi-domaines, basée notamment sur la création automatique d'une fédération des domaines sélectionnés via les contrôleurs de fédération des domaines sélectionnés et la sélection dynamique d'un domaine maître de ladite fédération.

FIG.3

EP 4 757 250 A1

**Description**

Domaine technique :

L'invention se situe dans l'application d'un ensemble de règles de sécurité (encore appelée politique de sécurité), dérivé de, ou paramétré, par des SSLAs (de l'anglais « Security Service Level Agreements »), qui sont une partie d'un contrat de niveau de service ou SLA (de l'anglais « Service Level Agreements ») lors de la mise en œuvre de services bout-en-bout composés d'applications et/ou réseaux informatiques répartie sur plusieurs domaines d'opérateurs différents et exposant des interfaces d'administration et d'orchestration différentes, situations rencontrées notamment dans les réseaux de télécommunications mobiles 5G/6G.

Technique antérieure :

Dans le présent document, on entend par 'domaine' un domaine tel que défini par le groupe ETSI MANO NFV « domaine administratif : ensemble de systèmes et de réseaux exploités par une seule organisation ou autorité administrative domaine d'infrastructure : domaine administratif qui fournit des ressources d'infrastructure virtualisées telles que le calcul, le réseau et le stockage ou une composition de ces ressources via une abstraction de service vers un autre domaine administratif, et est responsable de la gestion et de l'orchestration de ces ressources [...] domaine de réseau d'infrastructure : domaine au sein du NFVI qui comprend tous les réseaux qui interconnectent l'infrastructure de calcul/stockage ». Les termes correspondent à ce qui est décrit dans le document « GR NFV 003 - V1.5.1 - Network Functions Virtualisation (NFV); Terminology for Main Concepts in NFV (etsi.org) ».

Les plateformes de réseau et les fournisseurs cloud appartiennent à des domaines administratifs différents et offrent des fonctions provenant de fournisseurs différents. Dans ce contexte, il devient de plus en plus difficile - voire généralement exclu - pour les techniques d'orchestration antérieures de répondre aux besoins de sécurité des différents intervenants et de garantir le niveau de sécurité exigé tout le long du cycle de vie d'une tranche (en anglais « slice »), dans les réseaux pratiquant le découpage de réseau en tranches. Une tranche est un découpage de réseau physique en plusieurs réseaux logiques fonctionnant de manière indépendante avec des performances réseaux et une qualité de service qui lui est propre en vue de répondre aux besoins spécifiques d'un client ou entreprise.

Il est difficile d'appliquer d'une façon cohérente une politique de sécurité ou une SLA de bout en bout pour un service fourni au client final et qui s'appuie sur plusieurs domaines / opérateurs / interfaces différents.

Les difficultés rencontrées sont notamment les suivantes :

- difficulté horizontale : l'échange d'information entre orchestrateurs : technologies différentes, API différentes, protocoles de communication et format de données différents ;
- difficulté verticale : la descente de l'expression du besoin de sécurité en terme de SLA depuis une couche de gestion de services vers chaque domaine de sécurité sous forme de politiques de sécurité et la dérivation de cette politique sur des plateformes clouds sous forme de contrôles de sécurité ;
- difficulté multi-domaine : appliquer et maintenir un besoin de sécurité exprimé par des SLAs sur des appareils, des plateformes clouds avec des technologies différentes et des fournisseurs réseaux différents : cf. définition multi-domaine 5G par le groupe de travail NFV MANO de l'ETSI relatif à la gestion et l'orchestration de la virtualisation de fonction réseau (NFV acronyme de l'anglais « Network Function Virtualization ») ;
- difficultés liés à la centralisation : la technique antérieure utilise un orchestrateur global centralisé qui interagit avec chaque domaine et qui orchestre seul le service bout-en-bout, ce qui pose problème de la résilience du service, en cas de perte de connexion entre l'orchestrateur central et un des domaines orchestrés, et/ou en cas de défaillance d'un des domaines.
- difficulté de bout en bout : appliquer et maintenir un besoin de sécurité exprimé par des SLAs sur l'ensemble d'un système faisant intervenir des zones d'orchestration différentes par un chaînage de fonctions de sécurité (ex : SSLA propagée sur plusieurs domaines de sécurité) ;
- difficulté d'orchestration verticale : appliquer et maintenir un besoin de sécurité exprimé par des SLAs à travers de nombreux orchestrateurs hiérarchisés sur un seul domaine.

Résumé de l'invention :

A cet effet, suivant un premier aspect, la présente invention décrit un procédé d'orchestration multi-domaine de la sécurité par un système d'orchestration dans une plateforme de mise en œuvre de services comprenant une pluralité de domaines de ressources de calcul, de réseau ou de stockage pour la mise en œuvre des services ;

chaque domaine étant associé à :

- un orchestrateur de services orienté sécurité, dit SASO, autonome, effectuant, dans ledit domaine, une orchestration des services et une orchestration de la sécurité,

- un catalogue des fonctions, y compris de sécurité, déployables dans le domaine,

- un contrôleur de fédération,

- un gestionnaire de politique de sécurité,

selon lequel chaque service à orchestrer est associé à un accord contractuel numérique de niveau de sécurité, dit SSLA, et à un descripteur de topologie de l'orchestration dudit service, nommée SOD, le procédé comprend les étapes suivantes mises en œuvre par un module de gestion de services du système d'orchestration :

en fonction de la SSLA et du SOD associés au service, sélection de certains des domaines pour la mise en œuvre du service sélectivement à partir desdits domaines sélectionnés, déclenchement de la création automatique d'une fédération des domaines sélectionnés via les contrôleurs de fédération des domaines sélectionnés, et sélection dynamique, parmi les domaines de la fédération, d'un domaine maître de ladite fédération ;
fourniture du SOD et de la SSLA au gestionnaire de politique de sécurité du domaine maitre ;
selon lequel le gestionnaire de politique de sécurité du domaine maitre crée ensuite automatiquement, en fonction desdits SOD et SSLA, un descripteur de topologie d'orchestration du service augmenté avec la sécurité, nommé SASOD, décrivant la topologie de bout en bout du service déclinée sur les domaines de la fédération, y compris la SSLA associée au service et le transmet au SASO du domaine maître de la fédération, qui transmet à son tour le SASOD au SASO de chaque autre domaine de la fédération créée pour ledit service ;
dans chaque domaine :

- le SASO de chaque domaine de la fédération enrichit ledit SASOD, en fonction du catalogue de fonctions, y compris de sécurité, dudit domaine, en une description d'orchestration du service, spécifique au domaine et respectant la SSLA associée au service ;

- l'orchestration du service conformément à la SSLA sur le domaine est effectuée en fonction de ladite implémentation d'orchestration.

L'invention propose ainsi une solution d'orchestration multi-domaine de sécurité distribuée, fédérée et dynamique permettant l'application (par traduction automatique) d'un accord contractuel de niveau de sécurité (appelé SSLA) efficace en cas d'interopérabilité multi-domaines.
Dans des modes de réalisation, un tel procédé comprendra en outre l'une au moins des caractéristiques suivantes :

- dans au moins un des domaines de la fédération, une partie au moins de ladite implémentation d'orchestration est distribuée par le SASO dudit domaine à un orchestrateur du domaine distinct du SASO et dédié à un aspect parmi {réseau, applicatifs, plateforme} ; le déploiement du service conformément à la SSLA est effectué en fonction de ladite implémentation d'orchestration par au moins ledit orchestrateur du domaine distinct du SASO ;

- le procédé met en œuvre au moins l'une des dispositions parmi les suivantes :

dans au moins un des domaines de la fédération, le SASO est dupliqué sur une pluralité de nœuds hébergeant les ressources, un seul desdits SASOs étant actif à la fois dans ledit domaine, un autre desdits SASOs étant activé dans ledit domaine en cas de panne du SASO jusqu'alors actif ;

dans au moins un des domaines de la fédération dans lequel une partie au moins de ladite implémentation d'orchestration est distribuée par le SASO dudit domaine à un orchestrateur du domaine distinct du SASO, ledit orchestrateur du domaine distinct du SASO est dupliqué sur une pluralité de nœuds hébergeant les ressources, un seul desdits orchestrateurs étant actif à la fois dans ledit domaine, un autre desdits orchestrateurs étant activé dans ledit domaine en cas de panne de l'orchestrateur jusqu'alors actif ;

dans au moins un des domaines de la fédération, le contrôleur de fédération est dupliqué sur une pluralité de nœuds hébergeant les ressources, un seul desdits contrôleurs de fédération étant actif à la fois dans ledit domaine, un autre desdits contrôleur(s) de fédération étant activé dans ledit domaine en cas de panne du contrôleur de fédération jusqu'alors actif ;

- ledit autre élément d'un type donné parmi SASO, orchestrateur du domaine distinct du SASO et contrôleur de fédération, qui est à activer, suite à une panne de l'élément du même type actif jusqu'alors au sein du même domaine, est identifié, parmi les éléments du même type, par un mécanisme d'élection dynamique et distribuée ;

- le procédé met en œuvre au moins l'une des dispositions parmi les suivantes :

   suite à la détection qu'un domaine de la fédération est défaillant, sélection d'un autre domaine dans la pluralité de domaines pour remplacer, dans la fédération, le domaine défaillant, pour la mise en œuvre du service sélectivement à partir desdits domaines sélectionnés ;

   suite à la détection que le domaine maître de la fédération est défaillant, mise en œuvre d'un mécanisme d'élection dynamique et distribuée d'un nouveau domaine maître parmi les autres domaines de la fédération ;

- la conformité du niveau de sécurité du fonctionnement du service par rapport au SSLA sur chaque domaine est contrôlée par le SASO dudit domaine et en cas de détection de non-conformité, le SASO dudit domaine en notifie le SASO du domaine maître, ce qui déclenche le cas échéant au moins l'une des dispositions suivantes :

   modification de l'orchestration de ladite implémentation du SASOD ;

   modification d'implémentation du SASOD.

Suivant un autre aspect, l'invention décrit un système d'orchestration pour une plateforme de mise en œuvre de services comprenant une pluralité de domaines de ressources de calcul, de réseau ou de stockage pour la mise en œuvre des services, ledit système d'orchestration comportant associé à chaque domaine :

- un orchestrateur de services orienté sécurité, dit SASO, autonome, effectuant, dans ledit domaine, une orchestration des services et une orchestration de la sécurité,

- un catalogue des fonctions, y compris de sécurité, déployables dans le domaine,

- un contrôleur de fédération,

- un gestionnaire de politique de sécurité,

   dans lequel chaque service à orchestrer est associé à un accord contractuel numérique de niveau de sécurité, dit SSLA, et à un descripteur de topologie de l'orchestration dudit service, nommée SOD,
   dans lequel un module de gestion de services du système d'orchestration est adapté pour, en fonction de la SSLA et du SOD associés au service, sélectionner certains des domaines pour la mise en œuvre du service sélectivement à partir desdits domaines sélectionnés, pour déclencher la création automatique d'une fédération des domaines sélectionnés via les contrôleurs de fédération des domaines sélectionnés, et pour sélectionner dynamiquement, parmi les domaines de la fédération, un domaine maître de ladite fédération ;
   dans lequel le module de gestion de services du système d'orchestration est adapté pour, fournir le SOD et la SSLA au gestionnaire de politique de sécurité du domaine maitre ;
   dans lequel le gestionnaire de politique de sécurité du domaine maître est adapté pour créer ensuite automatiquement, en fonction desdits SOD et SSLA, un descripteur de topologie d'orchestration du service augmenté avec la sécurité, nommé SASOD, décrivant la topologie de bout en bout du service déclinée sur les domaines de la fédération, y compris la SSLA associée au service et pour le transmettre au SASO du domaine maître de la fédération, qui est adapté pour alors transmettre à son tour le SASOD au SASO de chaque autre domaine de la fédération créée pour ledit service ;
   dans lequel pour chaque chaque domaine :

   - le SASO de chaque domaine de la fédération est adapté pour enrichir ledit SASOD, en fonction du catalogue de fonctions, y compris de sécurité, dudit domaine, en une implémentation d'orchestration du service, spécifique au domaine et respectant la SSLA associée au service ;

   et dans lequel l'orchestration du service conformément à la SSLA sur le domaine est effectuée en fonction de ladite implémentation d'orchestration.

Dans des modes de réalisation, un tel système d'orchestration comprendra en outre l'une au moins des caractéristiques suivantes :

- dans au moins un des domaines de la fédération, une partie au moins de ladite implémentation d'orchestration est distribuée par le SASO dudit domaine à un orchestrateur du domaine distinct du SASO et dédié à un aspect parmi {réseau, applicatifs, plateforme} ;
  dans lequel le déploiement du service conformément à la SSLA est effectué en fonction de ladite implémentation d'orchestration par au moins ledit orchestrateur du domaine distinct du SASO ;

- dans au moins un des domaines de la fédération, le SASO est dupliqué sur une pluralité de nœuds hébergeant les ressources, un seul desdits SASOs étant actif à la fois dans ledit domaine, un autre desdits SASOs étant activé dans ledit domaine en cas de panne du SASO jusqu'alors actif ;

- dans au moins un des domaines de la fédération dans lequel une partie au moins de ladite implémentation d'orchestration est distribuée par le SASO dudit domaine à un orchestrateur du domaine distinct du SASO, ledit orchestrateur du domaine distinct du SASO est dupliqué sur une pluralité de nœuds hébergeant les ressources, un seul desdits orchestrateurs étant actif à la fois dans ledit domaine, un autre desdits orchestrateurs étant activé dans ledit domaine en cas de panne de l'orchestrateur jusqu'alors actif ;

- dans au moins un des domaines de la fédération, le contrôleur de fédération est dupliqué sur une pluralité de nœuds hébergeant les ressources, un seul desdits contrôleurs de fédération étant actif à la fois dans ledit domaine, un autre desdits contrôleur(s) de fédération étant activé dans ledit domaine en cas de panne du contrôleur de fédération jusqu'alors actif ;

- ledit autre élément d'un type donné parmi SASO, orchestrateur du domaine distinct du SASO et contrôleur de fédération, qui est à activer, suite à une panne de l'élément du même type actif jusqu'alors au sein du même domaine, est identifié, parmi les éléments du même type, par un mécanisme d'élection dynamique et distribuée.

Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple.

[Fig. 1] La figure 1 est une illustration des clusters SOMC et SDC dans un domaine ;

[Fig. 2] La figure 2 est une représentation du plan de contrôle d'un SOMC ;

[Fig. 3] La figure 3 représente l'architecture d'une solution d'orchestration de la sécurité dans un mode de réalisation de l'invention ;

[Fig. 4] La figure 4 représente les étapes d'un procédé d'orchestration de la sécurité dans un mode de réalisation de l'invention.

Des références identiques peuvent être utilisées dans des figures différentes lorsqu'elles désignent des éléments identiques ou comparables.

Description détaillée :

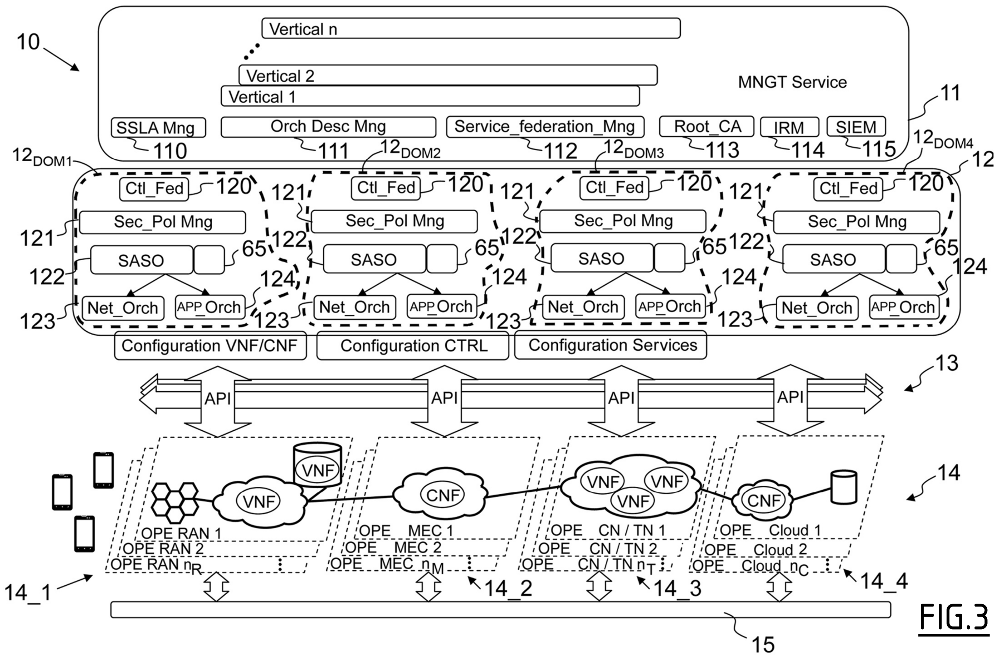

La figure 3 représente l'architecture 10 d'une solution d'orchestration multi-domaine de la sécurité dans un mode de réalisation de l'invention.
L'architecture 10 comporte trois couches qui s'étendent sur plusieurs domaines : une couche 11 de gestion de services de bout-en-bout, une couche 12 d'orchestration et une couche 14 comprenant une plateforme de ressources.
La couche 14 de plateforme représente la couche cible de l'orchestration, sur laquelle les services vont être déployés de bout-en-bout ; elle offre des ressources hétérogènes physiques et/ou virtualisées telles que des ressources de calcul, de réseau (de télécommunication) ou de stockage hébergées par des nœuds logiciels et/ou matériels. Ces ressources et nœuds associés sont fournis par des opérateurs variés et de type divers dans les différents domaines. Dans l'exemple représenté, quatre domaines sont considérés à titre d'exemple sur la figure 3:

- un domaine fournissant une plateforme réseau d'accès radio ouvert 14_1 pouvant être gérée par plusieurs opérateurs (« OPE RAN 1, ...,$n_R$ »),

- un domaine fournissant une plateforme de « multi-access edge computing » 14_2 pouvant être gérée par plusieurs opérateurs (OPE MEC 1, ...,$n_M$ »),

- un domaine fournissant un réseau de cœur/transport 14_3 pouvant être gérée par plusieurs opérateurs de réseau de cœur (Core Network en anglais ou CN) ou de réseau de transport (Transport Network en anglais ou TN) (« OPE CN/TN 1, 2,..., $_{nT}$,» et

- un domaine fournissant un cloud 14_4 pouvant être géré par plusieurs opérateurs (« OPE Cloud 1,..., $n_C$ ») ...

Une (ou plusieurs) ressources d'un nœud sur lequel une partie d'un service est déployée suite à l'orchestration est ainsi exploitée lors de la mise en œuvre du service.

Dans un mode de réalisation, ces domaines utilisent des fonctions de réseau virtuelles (en anglais Virtual Network Function ou VNF) et/ou des fonctions de réseau cloud (en anglais Cloud Network Function ou CNF).

Les différents domaines bénéficient d'un partage de connaissance collaborative via un module d'échanges 15.

La couche 12 d'orchestration comprend, pour chaque domaine, un orchestrateur de services orienté sécurité 122, nommé SASO 122 (SASO pour « Security-Augmented Service Orchestrator »), qui est autonome par rapport aux autres domaines. L'orchestrateur de services sécurisés SASO 122 exécute deux fonctionnalités : une fonctionnalité d'orchestration de services et une fonctionnalité d'orchestration de sécurité. Ces deux fonctionnalités peuvent, en réalité, suivant les modes de réalisation, être implémentées dans un même orchestrateur ou dans deux orchestrateurs qui interagissent.

Le but de l'orchestration consiste à automatiser les tâches et workflows (en français, des séquences d'opérations) complexes pour coordonner et gérer les composants nécessaires au fonctionnement d'un service applicatif ou réseau. Cela peut par exemple consister à déployer, configurer et chaîner des composants logiciels nécessaire à la réalisation du service et leur affecter des ressources de la plateforme 14 mis en œuvre par ces composants ..., ainsi que coordonner les ressources de plusieurs domaines configurées pour exécuter des tâches nécessaires à la fourniture d'un service conformément à la SLA et SSLA associées audit service.

La fonctionnalité d'orchestration de sécurité consiste à orchestrer de bout en bout (c'est-à-dire sur tous les domaines impliqués pour mettre en œuvre le service) les composants logiciels et matériels de sécurité nécessaires à un service conformément à un SSLA tout au long du cycle de vie du service. Il s'agit de déployer (et éventuellement retirer et/ou redéployer), configurer et chaîner dynamiquement des fonctions de sécurité entre elles et aux composants métier du service qui peuvent à leur tour être déployés dynamiquement par le SASO 122 ou être pré-déployés dans la couche plateforme 14 (par exemple des modules de sécurité matériel, des systèmes de gestion de clés, etc.).

Dans chaque domaine, le SASO 122 dispose d'un catalogue 65 de fonctions et applications de sécurité et métier autorisées par le domaine et déployables dans le domaine (compatibles avec l'infrastructure du domaine), afin que le SASO puisse sélectionner et déployer dynamiquement celles qui répondent aux politiques de sécurité à la fois du domaine et d'un service à orchestrer comme décrit plus bas.

En plus d'un SASO 122, plusieurs types d'orchestrateurs dédiés peuvent être pris en charge par chaque domaine. Par exemple, la couche 12 d'orchestration comprend en outre, pour certains au moins des domaines, un orchestrateur réseau 123 et un orchestrateur d'applications 124. Chaque type d'orchestrateur de domaine est aussi autonome par rapport à celui des autres domaines.

Un orchestrateur réseau 123 est adapté pour orchestrer les fonctions de réseau de télécommunication du domaine et un orchestrateur d'applications 124 est adapté pour orchestrer les fonctions d'applications du domaine. L'ensemble de ces fonctions de sécurité, réseau, et applications du domaine sont fournies par des ressources du domaine dans la couche 14 de ressources.

Pour chaque domaine, la couche 12 d'orchestration comprend en outre un contrôleur de fédération 120, permettant au SASO du domaine de fonctionner dans une fédération et comprend en outre un gestionnaire de politiques de sécurité 121 (Sec_Pol Mng 121) afin de pouvoir orchestrer les politiques de sécurité (ce dernier peut alternativement être placé dans la couche 11 de gestion de services ; cela dépend du cas d'utilisation, par exemple de la capacité de calcul dans les domaines lorsque les nœuds sont sur un edge).

Le gestionnaire de politiques de sécurité 121 est adapté pour fournir des descripteurs d'orchestration de services enrichis avec des politiques de sécurité en prenant en compte les SSLAs (« Security Service Level Agreement ») associés respectivement aux services.

Le SASO 122 intègre également une fonctionnalité de gestion de cycle de vie de l'orchestration de sécurité, qui joue un rôle important dans la résilience de la solution.

Dans un domaine, un SASO 122 est, dans le mode de réalisation considéré, répliqué sur plusieurs nœuds du même domaine. Il en va de même pour les autres types d'orchestrateurs (par exemple 123, 124), les contrôleurs de fédération 120 et les gestionnaires de politiques de sécurité 121.

Un seul orchestrateur d'un type donné est actif à la fois dans un domaine. Un autre orchestrateur du même type dans le même domaine peut être activé en cas de panne de cet orchestrateur (voir section résilience intra-domaine). Similairement un seul contrôleur de fédération et un seul gestionnaire de politique de sécurité sont actifs à la fois dans un domaine.

L'ensemble des éléments de la couche d'orchestration 12 décrits ci-dessus et dédiés au domaine i, i = 1 à 4 ici, est référencé 12DOMi.

Entre la couche 12 d'orchestration et la couche 14 des ressources, un ensemble d'interfaces de programmation d'application 13, dites API 13 est disposé : ces API 13 sont adaptées pour effectuer la configuration de services, la configuration de contrôleurs, la configuration des fonctions de sécurité. Parmi celles-ci des fonctions virtuelles ou« cloud native » (VNF/CNF) qui vont appliquer des traitements sur les paquets réseau, messages, voire données applicatives, échangées dans le plan de données (user/data plane), soit entre différents composants du service, soit entre des consommateurs du service (service consumer/user) et les composants du service exposés vers lesdits consommateurs. Certaines fonctions en particulier, dites fonctions de sécurité - VSF (Virtual Security Function) et PSF (Physical Security Function) dans les standards ETSI NFV-SEC - sont configurés par le SASO conformément aux politiques de sécurités (donc indirectement les SSLAs). Elles sont déclarées dans un format conforme aux APIs des orchestrateurs plus bas niveau comme le réseau, l'applicatif et/ou le cloud-natif afin que les VSF et PSF soient déployées par ces orchestrateurs.

La couche 11 de gestion de services (encore appelée couche de management de service et indiquée sur la figure 3 par « MNGT Service » 11) a comme rôle de gérer les services de bout-en-bout de manière à répondre aux besoins fonctionnels et non fonctionnels des entités fournissant des services à orchestrer ; ces entités appartiennent à des différents secteurs de la vie économique, appelés chacune « vertical » (cf. sur la figure 3 : « vertical 1 », ..., « vertical n ») et qui sont extrêmement divers : transports, média, énergie, industrie du futur, réalité augmentée ou défense. La couche 11 de gestion de services comporte les composants logiciels suivants afin d'assurer une orchestration dynamique de la sécurité dans chaque service en fonction des exigences des clients :

- un gestionnaire 111 de descripteurs d'orchestration de services, (« Orch Desc Mng ») adapté pour créer des descripteurs d'orchestration de services (SOD) - et gérer le cycle de vie de ces SOD : un SOD décrit la topologie d'un service à orchestrer en termes de topologie réseau, nœuds, composants logiciels, relations entre eux et actions à réaliser de bout en bout pour orchestrer cette topologie ; ce gestionnaire permet aussi de créer une archive déployable au niveau du SASO, c'est-à-dire qui comprend non seulement le SOD mais aussi tous les fichiers utilisés ou référencés par le SOD (fichiers de définitions importées, scripts, images de VNF/CNF, etc.) qui ne seraient pas accessibles autrement par le SASO ;

- un gestionnaire 112 de fédération inter-domaines adapté pour créer une fédération (associé à un service) entre les domaines impliqués pour rendre le service de bout-en-bout ;

- un gestionnaire 110 de SSLA (Security Service Level Agreement) adapté pour gérer le cycle de vie des descripteurs de SLAs de sécurité des différents services de bout-en-bout ;

- un ensemble de gestionnaires additionnels, ici 113, 114, 115... des ressources nécessaires à l'orchestration de la sécurité et à l'établissement de la confiance entre les domaines de sécurités. Il peut s'agir d'une infrastructure de gestion de clés cryptographiques (IGC) afin de distribuer des clés de chiffrement à partir d'une autorité de certification (Root _CA 113), ou encore d'un gestionnaire des informations et des événements de sécurité (*Security Information and Event Management,* SIEM 115 en anglais) afin de collecter et analyser les logs d'information de la fédération ou enfin un gestionnaire de réponse à incident (*Incident Response Management* IRM 114) qui définit des stratégies de remédiations sur une fédération, en cas d'évènements de sécurité imprévus ou en cas de violations des politiques de sécurité en place.

Formalisme de description d'orchestration de services

Les descripteurs d'orchestration de services (SOD) de bout-en-bout, considérés dans un mode de réalisation de l'invention, sont formalisés selon des formalismes standards de descripteurs d'orchestration tels que TOSCA (TOSCA, Committee Specification Draft 07 (2024)), représentant ainsi des TOSCA.

Le descripteur de topologie d'un service SOD sera enrichi en un SASOD comme décrit ci-après selon l'invention par des politiques de sécurité qui prennent en compte les SSLAs par le gestionnaire de politiques de sécurité.

Le SASOD peut être spécifié selon un formalisme qui s'appuie sur une extension d'un descripteur standard d'orchestration tel que TOSCA.

Nous décrivons dans ce qui suit un exemple d'implémentation de cette extension d'un descripteur SOD vers un SASOD en montrant la façon avec laquelle les SSLAs sont dérivées dans ce genre de descripteur afin de pouvoir orchestrer la sécurité dans un service de bout-en-bout.

Un SOD TOSCA doit être étendu par de nouveaux types de nœud TOSCA (TOSCA Node Type) - correspondants aux différents types de PEPs (Policy Enforcement Points ou security enablers) et les services de sécurité auxiliaires en support (Supporting Security Services) - et de nouvelles politiques TOSCA qui correspondent aux contrôles de sécurité spécifiés dans le SSLA.

Concrètement, pour chaque type d'exigence sur un contrôle de sécurité dans le SSLA, une politique de sécurité doit être définie (par exemple, politique d'accès aux données, politique de gestion des secrets, etc.). Pour cela, un nouveau type de politique TOSCA est défini (TOSCA Policy Type).

Pour chaque type de politique de sécurité possible, il est nécessaire de modéliser les différents types de nœud (Type de nœud TOSCA) qui vont devoir être déployés, c'est-à-dire rajoutés à la topologie, pour appliquer cette politique :

- les PEPs de Protection (composant qui applique concrètement les mesures de protection conformément à la politique de sécurité) : les PEP de protection appliquent divers mécanismes de protection des données requis par la politique d'accès aux données en transit : authentification des utilisateurs, authentification et autorisation du trafic, chiffrement/déchiffrement du trafic, signature numérique (et validation), filtrage, validation du contenu ;

- les PEPs de Détection : les capteurs de détection ont un de ces deux rôles :

  a. rôle de détection / surveillance (Monitoring PEP) des SLOs: appliquer une politique de surveillance de la sécurité définie explicitement dans les SLOs de la SSLA, par ex. surveiller les journaux d'accès d'un PEP de Protection à des fins de collecte de métriques d'accès aux données ou à des fins d'alerte (détecter trop de tentatives d'accès refusées, ou trop d'échecs d'authentification sur un compte donné, lorsque la politique de surveillance définit un seuil au-dessus duquel le compte doit être verrouillé temporairement par exemple ) ;

  b. rôle de vérificateur de conformité (de la politique de sécurité) : surveiller l'intégrité des PEP de protection pour garantir la conformité à la politique de sécurité (détecter les violations potentielles de la politique par falsification non autorisée) ;

- les services de sécurité en support des PEPs (PKI, IAM, Directory, PDP, Secrets Management Service, SIEM), et de manière générale tout service de sécurité avec lequel des PEPs vont interagir.

Ces nouvelles définitions de type de nœud sont définies dans des modèles TOSCA qui sont distincts des descripteurs finaux d'orchestration, pour être réutilisées dans différents descripteurs d'orchestrations finaux dans les domaines.

Quelques exemples de type de politique extraites d'une SSLA :

- Sécurité des communications de couche réseau (L3) :

  - IPsec
  - Wireguard

- Sécurité des communications de couche transport (L4) :

  - TLS
  - DTLS

- Autorisation (RBAC, ABAC, etc.)

Par exemple, une politique IPsec de protection des données en transit entre 2 domaines de type *site-to-site VPN* pourrait ressembler au YAML suivant :

```
# Politique VPN site-à-site utilisée pour la communication réseau inter-domaines
interdomain-vpn-policy:
        type: thales.tosca.policy.IPSec.SiteToSiteVPN
        properties:
                credential:
                        # Authentification mutuelle avec clé secrète pré-partagée (PSK)
                        token_type: PSK_BASE64
                        # Valeur de la PSK partagée entre les passerelles IPSec
                        key: mv7K9r8k68KfJBMBxQvPh/SVN2u0lGJ/Vri1jDPyjLY=
                # Nom de domaine (FQDN enregistré dans le DNS) de la passerelle appartenant au
domaine distant, avec laquelle la connexion doit s'établir
                        remote_gateway: gw1.foo.com
                # Paramètres IKE (Internet Key Exchange)
                # Pour chaque paramètre IKE ci-dessous, on suppose que IKE v2 est
systématiquement utilisé, conformément aux bonnes pratiques
                        ike_port: 555
                        ike_cipher_suites: [aes256gcm16-sha384-ecp384]
                # Suite d'algorithmes ESP (Encapsulating Security Payload)
                        esp_cipher_suites: [aes256]
        targets: # Le nœud TOSCA (élément de la topologie) auquel la politique s'applique
                -   interdomain_net
```

Le SASOD définitif généré par le SASO d'un domaine représente un descripteur qui inclut (illustration à l'aide de TOSCA) :

- un modèle de nœud (« Node template ») pour chaque type de nœud de service de sécurité défini dans le modèle SASOD et auquel il a associé un service de sécurité concret ;

- les modèles de politiques en fonction des types de politique définis dans le modèle SASOD ;

- une spécification de modèles de nœuds ou des groupes auxquels les politiques de sécurité sont associées, par exemple, si la propriété « token_type » a pour valeur « PSK_BASE64 » :

   ∘ Ajouter un « Node template » de type (Node Type) pour le PEP de protection du domaine 1 qui implémente une fonction de passerelle VPN IPsec, par exemple une passerelle *IPsec* en tant que nœud du Domaine 1, ayant une configuration correspondante à la policy template *interdomain-vpn-policy* précédente, dans laquelle certaines propriétés sont générées automatiquement par le SASO, telles que : la propriété « key » de la PSK (Pre-Shared Key) encodée en Base64, qui est une clé AES générée aléatoirement, l'adresse IP - ou nom de domaine - publique X de cette gateway (prise dans le groupe d'adresses publiques disponibles du domaine 1), et une adresse IP - ou nom de domaine - Y (et éventuellement un port non-standard pour la passerelle distante (*remote_gateway*) prise dans le groupe d'adresses publiques disponibles du domaine 2 ;

   ∘ Ajouter un « Node template » - fonctionnellement équivalent - en tant que nœud du domaine 2, sachant que ce domaine 2 éventuellement ne supporte / propose pas la même implémentation IPsec que le domaine 1 mais une implémentation différente, par exemple *Stormshield SNS,* ayant des propriétés de configuration similaires, la même PSK et une adresse publique (exposée vers l'extérieur) identique à l'adresse Y ci-dessus, et l'adresse de la passerelle distance (« *remote_gateway »)* identique à l'adresse X ci-dessus ;

   ∘ Ajouter un « Node template » pour le service de gestion de clés (KMS) ou plus généralement de gestion des secrets (*Secrets Management*)*,* qui va gérer la mise à jour de la/les PSKs ;

   ∘ Ajouter les « Node Templates » pour les PEPs de détection (monitoring SLOs) associés aux PEPs de protection (policy / SSLA compliance) ;

   ∘ Les TOSCA des relations (« relationships ») entre PEPs de protection, les ressources protégées par ceux-ci, et les services de sécurité d'une part ; entre les PEPs de détection et les ressources surveillées y compris les PEPs de protection d'autre part.

Le SASOD est par la suite distribué et utilisé par les différents types d'orchestrateurs des domaines de la fédération liée au service, et pourra être traduit dans d'autres formalismes en fonction des plateformes orchestrées spécifiquement dans chaque domaine et par chaque type d'orchestrateur (ex : TOSCA vers topologies Terraform, TOSCA vers manifestes Kubernetes, etc.).

Formalisme de description de SSLAs gérés par un gestionnaire de SSLAs

Afin d'automatiser l'orchestration de la sécurité (pour un service 6G par exemple), il est considéré, dans un mode de réalisation de l'invention, qu'un format interprétable par une machine est adopté pour les SSLA selon le modèle SPECS (cf. V. Casola, A. D. Benedictis, M. Rak and U. Villano, "SLA-Based Secure Cloud Application Development: The SPECS Framework," 2015 17th International Symposium on Symbolic and Numeric Algorithms for Scientific Computing (SYNASC), Timisoara, 2015, pp. 337-344, doi: 10.1109/SYNASC.2015.59).

La SSLA a pour rôle de définir le niveau de qualité de service sur le plan de la sécurité d'une façon contractuelle entre un client et le fournisseur de service de bout-en-bout ou le fournisseur de sécurité qui a comme rôle de garantir la sécurité du service de bout-en-bout durant tout le cycle de vie du service.

Une SSLA spécifie plus concrètement les éléments suivants :

- capacités de sécurité requises dans un service à orchestrer, une capacité étant définie comme un ensemble de contrôles de sécurité qui proviennent d'un ou plusieurs référentiels tels que NIST SP 800-53, Cloud Security Alliance's CCM, ISO 27005 ou un référentiel interne d'entreprise ;

- une spécification de métriques liés à chaque contrôle de sécurité, tels que le nom et la définition de la métrique, son échelle de mesure et l'expression utilisée pour calculer sa valeur ;

- une spécification des objectifs de niveau de service de sécurité (SSLO : Security Service Level Objective) définissant le niveau des métriques exigé pour chaque contrôleur de sécurité.

Un exemple de SSLA pour un service de « slice » 5G pour des objets connectés pourrait spécifier des contrôles de sécurité exigés en se basant sur des standards tels que le NIST SP 800-53 ou le Cloud Security Alliance CCM :

- un chiffrement de données en transit

- une authentification et autorisation

Les Métriques de sécurité associés à ces contrôles peuvent être respectivement :

- le niveau de Confidentialité & Intégrité (TLS or IPsec)
  1 (TLS 1.2 & 1.3), 2 (TLS 1.2 & 1.3 avec PFS seulement), 3 (TLS 1.3 seulement), 4 (TLS 1.3 sans AES_128)

- le niveau d'Authentification (d'Assurance) (cf. NIST SP):
  1 (aucun), 2 (PSK), 3 (certificats PKI).

Les SSLOs qui leurs sont associés, sont respectivement (par exemple)

- Niveau de Confidentialité & Intégrité >= 2

- Niveau d'Authentification >= 3

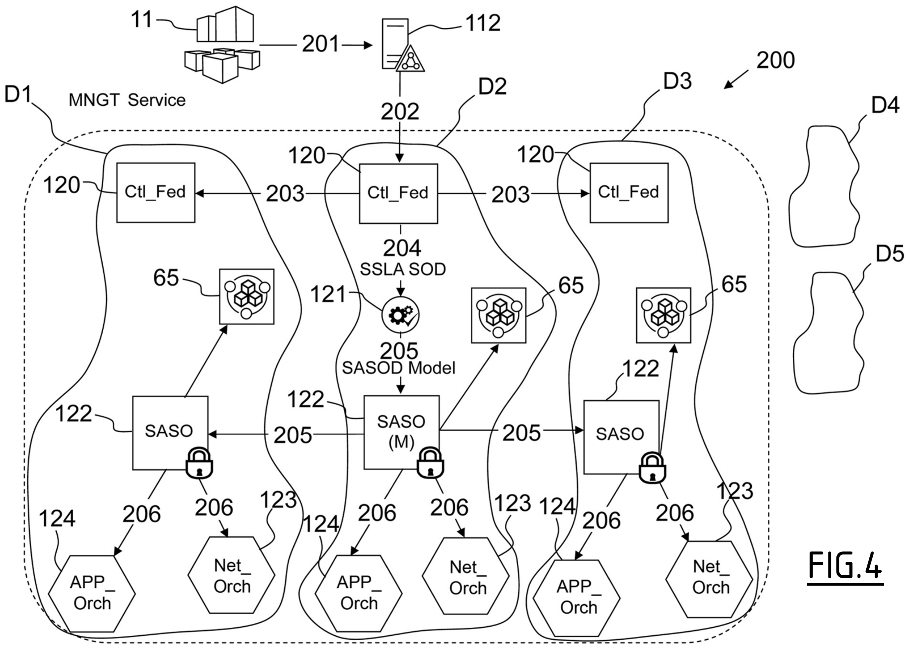

Il est à présent décrit un procédé 200 d'orchestration multi-domaine de la sécurité d'un service, dans un mode de réalisation, en référence aux figures 3 et 4.

Pour chaque service à orchestrer, dans une étape 201, le gestionnaire 112 de fédérations inter-domaines reçoit en entrée le descripteur d'orchestration du service, le SLA et le SSLA associés au service, fournis par les gestionnaires 110, 111 et crée une fédération entre les domaines de manière à répondre aux besoins fonctionnels, non-fonctionnels et de sécurité d'un service donné qui sont définis par la couche 11 de gestion de services. Ainsi, plus précisément :

- en fonction du descripteur d'orchestration du service, du SLA et du SSLA, le gestionnaire 112 de fédérations inter-domaines sélectionne :
- les domaines impliqués dans la fédération parmi l'ensemble des domaines disponibles (dans l'exemple représenté en figure 4, les domaines sélectionnés parmi les domaines disponibles D1 à D5 sont D1 à D3) et
- en outre, parmi ces domaines sélectionnés, un domaine qui jouera le rôle de « maître » dans la fédération (ici D2).

Dans une étape 202, le gestionnaire 112 de fédérations inter-domaines sollicite par la suite le domaine maître, à travers le contrôleur de fédération 120 du domaine maître, en lui envoyant le SOD et le SSLA, ainsi que la liste des domaines impliqués dans la fédération afin d'initier la fédération liée au service.

Dans une étape 203, le contrôleur de fédération 120 du domaine maître initie la fédération en informant les contrôleurs de fédération 120 des autres domaines de la fédération qui doivent acquitter à leur tour leur participation à la fédération. Le contrôleur de fédération 120 du domaine maître renvoie une notification d'échec au gestionnaire 112 de fédérations inter-domaines si l'un des domaines de la fédération n'acquitte pas sa participation, c'est-à-dire s'il ne répond pas pendant un temps donné (pré-défini) ou répond avec un message d'erreur qui donne plus de détail sur la nature de l'erreur. Dans ce cas, le domaine maître notifie ceux des autres domaines (de la fédération) ayant déjà acquitté que l'opération (création de la fédération) est annulée.

Dans une étape 204, le contrôleur de fédération 120 du domaine maître distribue ensuite le SOD et le SSLA au gestionnaire de politiques de sécurité 121 du domaine maître qui complète, en fonction du SSLA, le SOD du service de bout-en-bout avec des politiques de sécurité et les services/fonctions de sécurité qu'il faut orchestrer dans le service de bout-en-bout et qui dérivent du SSLA.

Le SOD mis à jour s'appelle descripteur d'orchestration de service augmenté avec la sécurité (SASOD).

Dans une étape 205, afin d'initier le processus d'orchestration au sein de la fédération :

- le SASOD est délivré au SASO 122 actif du domaine maître, qui à son tour le distribue aux SASO 122 des autres domaines de la fédération ; le SASO 122 du domaine maître peut distribuer la totalité de ce descripteur SASOD comme il peut ne distribuer à un domaine que les parties du descripteur qui concerne ce domaine (il s'agit d'un choix d'implémentation : dans le premier cas, il favorise la distribution et l'autonomie des différents domaines et facilite les changements de rôle entre domaines en domaine maître ; le deuxième cas s'adapte à une politique qui limite le partage d'informations entre domaines).

- chaque SASO 122 d'un domaine de la fédération lance une recherche au niveau du catalogue 65 de sécurité de ce domaine afin de trouver les fonctions de qui concernent le domaine et qui répondent aux SSLAs qui sont exprimés sous forme de politiques et de nœuds dans le SASOD ; une fois ces fonctions de sécurité trouvées, le SASO 122 génère dans ce cas un SASOD définitif pour son domaine qui décrit, tous les applications et fonctions de sécurités qui seront orchestrés dans le cadre de la mise en œuvre du service considéré. Le SASO 122 de chaque domaine transforme le SASOD en un descripteur de service compatible pour chaque orchestrateur 123 124 de plus bas niveau dans chaque domaine. Les orchestrateurs 123 124 de chaque domaine acquittent du succès du déploiement des services auprès du SASO 122 de leur domaine. Chaque SASO 122 de la fédération informe le SASO du domaine maître du succès de l'implémentation sur leur domaine une fois que les déploiements sont réalisés. Cela permet de réactualiser les services lorsqu'une solution est mise à jour et d'être au plus proche de l'implémentation.

L'ensemble des échanges a lieu via le module d'échanges 15.

Le SASO 122 de chaque domaine de la fédération orchestre les services de sécurité sélectionnés et les configure selon le SASOD généré pour son domaine. Le SASO 122 du domaine Di, i = 1 à 3, n'exécute pas les tâches d'orchestration qui ne concernent pas son domaine si elles figurent dans le SASOD qui lui a été distribué.

En plus de l'orchestration des services de sécurité, à chaque fois que le SASO 122 du domaine Di, i = 1 à 3, rencontre une tâche d'orchestration spécifique d'un orchestrateur métier 123, 124 de l'infrastructure du domaine, dans une étape 206, le SASO 122 délègue cette tâche à l'orchestrateur métier 123, 124 correspondant de Di (par exemple réseau, applicatif, etc.). Ce dernier envoie un acquittement de toutes les tâches d'orchestration réalisées au SASO 122 qui à son tour envoie un acquittement de toutes tâches d'orchestration réalisées au gestionnaire 121 de politiques de sécurité du domaine maître (D2) en lui envoyant le SASOD orchestré (i.e. un SASOD comme décrit plus haut, sauf que celui-là représente ce qui a été réellement orchestré). Le gestionnaire de politiques de sécurité 121 vérifie la cohérence des orchestrations de bout-en-bout ainsi que sa conformité avec le SSLA. Le domaine maître D2 acquitte l'orchestration de bout-en-bout du service au gestionnaire de fédération 112.

Chaque SASO 122 compare en temps réel non critique l'état du système orchestré dans son domaine avec le SASOD sur son domaine pour vérifier la satisfaction de la politique de sécurité localement. Cela permet la dynamique du maintien de la politique de sécurité.

Les contrôleurs 120 des domaines d'une fédération partagent la même sous-autorité de certification (sous-CA) qui est dérivée de l'autorité de certification racine Root_CA 113 présente dans la couche de gestion de service 11. Cela permet de maintenir une relation de confiance entre les domaines d'une fédération, basée sur la génération de clés cryptographiques grâce à cette sous-CA.

Le gestionnaire de fédération 112 crée une fédération entre plusieurs domaines pour chaque service à orchestrer de bout-en-bout en sélectionnant ces domaines en fonction de leurs propriétés métier, de qualité de service et de sécurité indiquées respectivement dans le SOD, SLA et SSLA du service à orchestrer. Par exemple, un domaine ne possédant pas les conditions nécessaires à remplir pour la robustesse des algorithmes de chiffrement pour une fédération donnée ne peut pas rejoindre cette dernière. La sélection d'un domaine maître d'orchestration peut également se faire en fonction de ces propriétés métier, de qualité de service ou de sécurité et confiance.

La création d'une fédération permet à deux ou plusieurs domaines de gérer le processus d'orchestration d'une façon collaborative entre eux sans avoir recours à une gestion centralisée de l'orchestration au niveau de la couche 11 de gestion de services de bout-en-bout. Contrairement aux architectures de référence existantes d'orchestration qui se basent sur un orchestrateur centralisé pour coordonner l'orchestration entre plusieurs domaines, cette approche de décentralisation évite non seulement le point de défaillance unique d'une architecture centralisée mais donne une autonomie aux domaines. Cette autonomie est très utile dans certains cas d'usages tels que la défense où les domaines peuvent représenter des véhicules blindés et/ou drones qui collaborent d'une façon autonome sur certaines périodes de leur cycle de vie. Ceci est le cas en général pour des cas d'usage qui intègrent des objets connectés et de l'Edge même dans un contexte civil.

Un domaine peut faire partie de plusieurs fédérations. En particulier, un domaine maître peut faire partie de plusieurs fédérations et être élu comme maître dans plusieurs fédérations. Dans ce cas, trois niveaux d'isolation sont possibles pour les fédérations selon les exigences de sécurité et de ressources exprimés dans le SLA et le SSLA.

Ces trois niveaux d'isolation distincts sont les suivants :

- niveau « isol_1 » : les nœuds participant à des fédérations différentes font partie de clusters différents (un cluster est défini comme étant un ensemble de nœuds qui permettent d'exécuter une application donnée) ; chaque fédération bénéficie dans ce cas de son propre SOMC (« Security Orchestration Management cluster ») et son propre SDC (« Service Deployment Cluster ») sur ces nœuds (voir section « Architecture des plans d'orchestration intra-domaine et leur initialisation » ci-dessous). L'isolation est dans ce cas maximale mais réquisitionne plus de ressources sur les nœuds. C

- niveau « isol_2 » : les fédérations peuvent partager un SOMC et avoir chacune son propre SDC ; Cela assure une isolation maximale pour la sécurité des services déployés, mais mutualise la gestion de l'orchestration dans un seul cluster. Dans ce cas, l'isolation de la gestion de l'orchestration pour chaque fédération au sein du même SOMC est tout de même assurée, de manière logique par contrôle d'accès, qui est donc moins forte que dans le cas précédent (niveau « isol_1 »). En revanche, elle permet une consommation moindre des ressources de calculs pour chaque nœud du SOMC ce qui est plus propice aux environnements edge ;

- niveau « isol_3 » : les fédérations peuvent partager le même SOMC et le même SDC pour toutes les fédérations ; cette solution est mieux adaptée au Edge ; elle assure une isolation logique par contrôle d'accès.

Le SOD est ainsi un descripteur comportant des informations, notamment des topologies mais aussi des ressources supplémentaires nécessaires à ces topologies (ex : fichiers source). Le SOD est ensuite enrichie par le Policy Manager dans le domaine maître pour générer le SASOD. Le SASOD est ensuite interprété par le SASO qui va exécuter les actions nécessaires pour orchestrer la topologie décrite dans le SOD.

Le modèle de SASOD (TOSCA étendu dans l'exemple) est généré par le gestionnaire 121 de politiques de sécurité du domaine maître et distribué aux orchestrateurs de sécurité de tous les domaines de la fédération par le SASO. C'est à chaque orchestrateur de chaque domaine de déterminer l'implémentation locale pour les SSLA traduits dans les modèles de SASOD et d'informer le SASO du domaine maître du succès de l'implémentation sur son domaine.

Chaque type de nœud (Node Type (enabler)) a été déterminé en fonction des fonctions de sécurité (PEPs / Enablers) supportés par chaque domaine (disponibles dans leur catalogue respectif), de leurs métadonnées et de la politique demandée.

Déploiement d'un service sécurisé par un orchestrateur SASO 122, et résilience de l'orchestration de la sécurité intra-domaine

Architecture des plans d'orchestration intra-domaine et leur initialisation

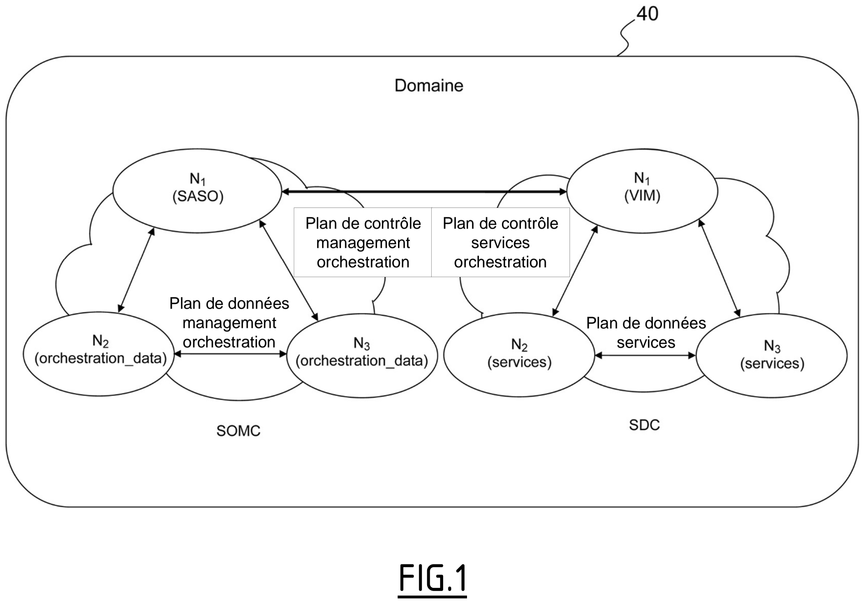

En référence à la figure 1, pour chaque domaine, on considère 2 clusters :

- un cluster de gestion et d'orchestration de la sécurité (« Security Orchestration & Management Cluster » - SOMC), dans lequel est hébergé le SASO 122 ;

- un cluster de déploiement des services sécurisés (« *Service Deployment Cluster* » - SDC), dans lequel sont déployés / hébergés - et orchestrés de manière générale - les composants du service et fonctions de sécurité associés.

Dans le SOMC : entre le Node 1 (N1 : SASO) et le Node 3 (N3 : données d'orchestration « orchestration_data ») se trouve le plan de contrôle interne du SOMC ; entre le Node 2 (N2 : données d'orchestration) et le Node 3 se trouve le plan de données du SOMC.

Un VIM (« Virtualized Infrastructure Manager ») est un orchestrateur de services, spécifique à la plateforme d'exécution et instancié dans le SDC pour une fédération (« tenant ») donnée. Il s'agit d'un orchestrateur de bas niveau, spécifique à la technologie du SDC

Dans le SDC : entre le Node 1 (N1 : VIM) et le Node 2 (N2 : service) se trouve le plan de contrôle interne du SDC ; entre le Node 2 et le Node 3 (N3 : services) se trouve le plan de données de services.

Entre les Nodes 1 du SOMC et SDC se trouve le réseau de plan de contrôle d'orchestration intra domaine.

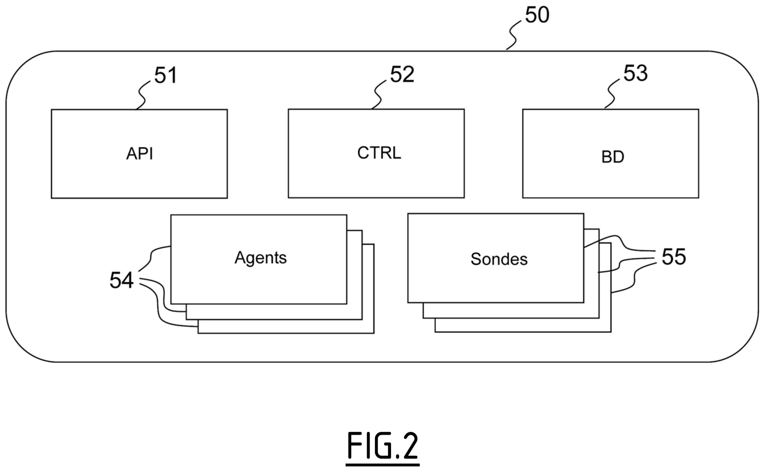

Les plans de contrôle du SOMC et SDC possèdent des composants similaires (cf. Figure 2), excepté le SASO dans le SOMC, et des plans de données divergents en fonction de la finalité SASO / VIM.

Le plan de contrôle 50 du SOMC comprend donc les fonctionnalités suivantes :

- une API 51 de gestion et d'orchestration de service sur un nœud du SOMC et qui implémente toutes les interactions nécessaires entre les composants de l'orchestrateur ;

- une base 53 de données répliquée sur chaque nœud du SOMC pour la persistance des données du plan de contrôle de la gestion de l'orchestration ;

- un contrôleur 52 de gestion de l'orchestration sur un nœud du SOMC qui vérifie l'état du plan de contrôle, du plan de données et de la politique de sécurité et s'assure de leur résilience ;

- un agent 54 répliqué sur chaque nœud du SOMC afin d'exécuter les tâches de la gestion de l'orchestration ;

- une sonde 55 de monitoring répliquée sur chaque nœud du SOMC afin de surveiller les tâches de gestion de l'orchestration.

De façon similaire, le plan de contrôle du SDC comprend les fonctionnalités suivantes :

- une API d'orchestration sur un nœud du SDC qui implémente toutes les interactions nécessaires entre les composants de l'orchestrateur VIM ;

- une base de données répliquée sur chaque nœud du SDC pour la persistance des données qui concernent le plan de contrôle de l'orchestration des services ;

- un contrôleur d'orchestration sur un nœud du SDC qui vérifie l'état du plan de contrôle et du plan de données des services de sécurité et leur résilience ;

- un agent répliqué sur chaque nœud du SDC afin d'exécuter les services ;

- une sonde de monitoring répliquée sur chaque nœud du SDC afin de surveiller les services.

Cette séparation assure un niveau de résilience à la fois pour la gestion et l'orchestration (SOMC) et pour les services déployés (SDC) tout en séparant les différents plans de données et plans de contrôle.

Dans cette séparation, on peut noter que seul le réseau de plan de contrôle de l'orchestration intra-domaine est externe aux 2 clusters. Quatre autres sous-réseaux sont notables :

- le plan de contrôle du SOMC,

- le plan de données du SOMC,

- le plan de contrôle du SDC,

- le plan de données du SDC.

Aucun de ces sous-réseaux n'est public, il ne s'agit que de sous-réseaux locaux aux nœuds des clusters.

À l'initialisation le déploiement des clusters SOMC et SDC dépendent de la configuration d'isolation associée à la fédération (cf chapitre décrivant les trois niveaux d'isolation plus haut).

Lors de l'initialisation et dans le cas de l'isolation maximale des clusters (correspondant au niveau « isol_1 », décrit plus haut), chaque contrôleur 120 de fédération initial reçoit l'ordre, issu de la couche 11 et transmis par le contrôleur 120 maître de la fédération initial, de déployer un nouveau SOMC et un nouveau SDC dédiés à la nouvelle fédération. Par la suite, chaque contrôleur 120 de fédération déploie les services de gestion de l'orchestration nécessaires dans le nouveau SOMC, à savoir un nouveau contrôleur 120 de fédération dédié à cette nouvelle fédération, un SASO 122 et tous les autres orchestrateurs de plus bas niveau. Le nouveau contrôleur 120 de fédération est configuré pour communiquer avec le nouveau SASO 122 et tous les autres nouveaux contrôleurs 120 de fédération. Le nouveau SASO 122 est configuré pour communiquer avec les nouveaux orchestrateurs de plus bas niveau. Les nouveaux orchestrateurs de plus bas niveau sont configurés pour communiquer avec le VIM du nouveau SDC. Enfin, le contrôleur 120 maître de la fédération initial délègue son rôle au nouveau contrôleur 120 de son domaine qui devient maître de la nouvelle fédération. Ce nouveau contrôleur 120 maître de la fédération informe la couche 11 de son nouveau rôle et acquitte du succès de la création de la nouvelle fédération.

Lors de l'initialisation et dans le cas de l'isolation des clusters SDC uniquement (correspondant au niveau « isol_2 », décrit plus haut)], chaque contrôleur 120 de la nouvelle fédération reçoit l'ordre, issu de la couche 11 et transmis par le contrôleur 120 maître de la fédération, de déployer un nouveau tenant dans son SOMC pour séparer logiquement les services de gestion de l'orchestration de la nouvelle fédération, ainsi qu'un nouveau SDC dédié à la nouvelle fédération. Par la suite, chaque contrôleur 120 de fédération configure les orchestrateurs de plus bas niveau pour communiquer avec le VIM du nouveau SDC. Enfin, le contrôleur 120 maître de la fédération acquitte du succès de la création de la nouvelle fédération auprès de la couche 11.

Lors de l'initialisation et dans le cas de l'isolation minimale des clusters (correspondant au niveau « isol_3), chaque contrôleur 120 de la nouvelle fédération reçoit l'ordre, issu de la couche 11 et transmis par le contrôleur 120 maître de la fédération, de déployer un nouveau tenant dans le SOMC et dans le SDC afin d'isoler logiquement tous les services de la nouvelle fédération. Enfin, le contrôleur 120 maître de la fédération acquitte du succès de la création de la nouvelle fédération auprès de la couche 11.

Résilience intra-domaine

► Résilience intra-domaine des services d'orchestration et de sécurité

Comme le SASO et tous les autres orchestrateurs sont des services, la résilience intra-domaine de l'orchestration sera régie par les mêmes mécanismes dans le SOMC et le SDC. La résilience des services d'orchestration de service est sous la responsabilité du plan de contrôle du SOMC. La résilience des services est sous la responsabilité du plan de contrôle du SDC.

Un contrôleur d'un plan de contrôle s'assure de la résilience d'un service en :

- mettant à jour l'état du cluster

- appliquant une boucle de contrôle pour :

  ◦ déterminer si les réplicas des services existent et sur quels nœuds ils sont installés ;

  ◦ calculer l'instanciation de nouveaux réplicas s'il en manque par rapport à la demande en sélectionnant des nœuds appropriés et en fonction de critères de disponibilité et de qualité des services ;

- déployant les réplicas manquants des services sur les nœuds sélectionnés.

Pour ces boucles de contrôle et dans le cas d'une panne d'un nœud, le nouvel état du nœud est déclaré comme indisponible. Les états des services sur ce nœud seront ainsi affectés et la boucle de contrôle pour la réplication des services déclenchera la migration de ces derniers sur les nœuds encore disponibles pour assurer la résilience.

► Résilience intra-domaine du plan de données des services d'orchestration et de sécurité

Afin d'accompagner la résilience d'une application, il est nécessaire d'assurer la résilience de ses données. Pour cela, 2 boucles de contrôle sont exploitées :

- une boucle dans le plan de contrôle pour s'assurer de la résilience des réplicas des services de stockage (pour un service) sur les nœuds ; les réplicas de stockage sont des services, donc ce fonctionnement est le même que la boucle de contrôle pour la réplication des services ;

- une boucle dans le plan de données pour s'assurer de la réplication des données en lecture/écriture sur les nœuds pour un service.

La sélection de nœud désigne un algorithme qui a pour but de choisir un nœud parmi tous ceux disponibles dans un ou plusieurs clusters. Ce nœud est sélectionné en fonction de critères de sélection comme sa consommation de ressources ou de ses propriétés réseau :

- unités CPU disponibles ;

- mémoire RAM disponible ;

- espace disque disponible ;

- interfaces et bande passante réseau disponibles ;

- ports disponibles.

Ces critères permettent une première sélection de nœuds parmi tous ceux disponibles sur une simple approche. Un seul des critères non respectés pour un nœud disqualifie automatiquement ce nœud pour la suite de l'algorithme de sélection. Si aucun des nœuds n'est disponible, l'algorithme retourne un ensemble vide.

Parmi les premiers nœuds sélectionnés, un deuxième calcul est effectué pour déterminer un score. Chaque critère sera normalisé en fonction de la disponibilité des ressources suivantes :

- cpu_norm = unités CPU disponibles / unités CPU totales

- mem_norm = RAM disponible en octets / RAM totale en octets

- disque_norm = Stockage disponible en octets / Stockage total en octet.

Puis un algorithme de score normalisé est appliqué :

$$score\_noeud = (cpu\_norm + mem\_norm + disque\_norm) / 3$$

Tous les nœuds sont comparés par score et celui au score le plus élevé est sélectionné. En cas d'égalité, un des nœuds est sélectionné aléatoirement. Une alternative consiste à prendre le nœud avec le plus petit (ou le plus grand) identifiant dans le cluster, par comparaison lexicographique ou numérique en fonction du choix d'implémentation, sachant que cet identifiant est unique pour chaque nœud dans le cluster (typiquement basé sur le FQDN dans le certificat PKI du nœud).

Donc, en plus des étapes de déploiement initial d'une application, décrites dans la section ci-dessus « Résilience des services d'orchestration et de sécurité » :

- le contrôleur :

  - détecte l'absence de réplicas de stockage d'un service ;

  - calcule la création des instances de stockage ;

  - calcule l'installation d'un contrôleur de stockage sur le nœud du service ;

  - sélectionne les nœuds où les installer (selon l'algorithme de sélection décrit ci-dessus, dans un mode de réalisation) ;

  - notifie l'API ;

- l'API demande aux agents de déployer :

  ○ un réplica du stockage sur les nœuds sélectionnés

  ○ un contrôleur de stockage sur le nœud du service

- le contrôleur de stockage surveille les actions de lecture/écriture du service sur le réplica de stockage local, et synchronise toute opération sur les autres réplicas du plan de données.

Ainsi, s'il y a une panne du réplica de stockage sur un des nœuds, ou bien une panne d'un des nœuds, la persistance des données est assurée grâce à la réplication de ces dernières sur tous les nœuds. Dans le cas de la panne du nœud qui héberge l'instance du service et du contrôleur de stockage, l'API du plan de contrôle peut redéployer ces deux instances sur un nœud disponible qui retrouveront le réplica local du stockage, contenant le dernier état mis à jour des données persistées. Ce comportement est identique au scénario d'une panne d'un nœud et de la réplication de ses services, décrit plus haut.

► Résilience intra-domaine du plan de contrôle

Base de données pour le plan de contrôle

La résilience du plan de contrôle est assurée par la réplication de tous ses composants sur plusieurs nœuds d'un cluster.
Le stockage nécessaire au plan de contrôle est répliqué sur tous les nœuds et fonctionne en cluster indépendant. Les membres de ce cluster se configurent statiquement en renseignant pour chaque membre de ce cluster quel sont les points d'accès des autres membres. Par la suite, le mode haute disponibilité des données du cluster est effectué en utilisant le protocole RAFT (In search of an understandable consensus algorithm, Diego Ongaro and John Ousterhout, 2014, in Proceedings of the 2014 USENIX conference on USENIX Annual Technical Conference) entre les membres de ce cluster. Ainsi, le stockage de données via un des membres de ce cluster entrainera la synchronisation des données sur les autres membres afin d'en assurer la résilience.
Cela assure la résilience des données du plan de contrôle du SOMC et du SDC.

API

Les réplicas de l'API et du contrôleur fonctionnent de manière indépendante, c'est-à-dire que seule l'instance qui est sollicitée à un instant T s'exécutera indépendamment des autres instances. Ainsi, un seul point d'accès vers une API est sollicité pour chaque requête. Cette API ne fait appel qu'au stockage local, qui répliquera les données de ce nœud sur tout le cluster de stockage.
La sollicitation d'une API sera déterminée par un équilibreur de charge (en anglais « load-balancer ») en amont d'une requête. L'équilibreur de charge étant lui-même une application, sa résilience est assurée de la même manière que pour une application du plan de données (cf. section ci-dessus « Résilience des services d'orchestration et de sécurité »).

Agents et Sondes

L'agent et la sonde sont installés sur chaque nœud.
En cas de panne d'un des nœuds, la résilience du plan de contrôle du cluster est donc assurée.

► Résilience intra-domaine de la politique de sécurité

La résilience des services de sécurité est bien assurée par le VIM, mais la résilience des politiques de sécurité est assurée par le SASO.
Pour appliquer une politique de sécurité, le SASO communique avec le plan de contrôle du SDC à travers le sous-réseau du plan de contrôle de l'orchestration intra-domaine, afin que les bons services de sécurité soient déployés, ainsi que le monitoring de la politique de sécurité. Le SASO récolte alors les métriques des sondes afin de surveiller l'état et la résilience d'une politique à l'aide de son contrôleur.
L'implémentation de la politique fait alors appel à des mécanismes de résilience spécifiques :

a/ un client envoie un SASOD à l'API du SASO ;

b/ l'orchestrateur SASO interroge la base de données du plan de données du SOMC pour vérifier s'il n'existe pas déjà une version du SASOD dans la base ;

c/ le SASO détecte ainsi s'il s'agit d'un nouvel état du SASOD auquel cas il effectue les tâches suivantes :

   ◦ compare avec l'implémentation actuelle de la politique ;

○ détecte l'absence de services de sécurité implémentant la politique sur les nœuds du SDC ;

○ sélectionne les services de sécurité adéquats selon la politique de sécurité

○ enrichit le SASOD avec les services de sécurités sélectionnés, puis retourne ce descripteur à l'API ;

d/ le SASO sauvegarde la mise à jour du SASOD dans la base de données du plan de données du SOMC, le traduit en langage spécifique et l'envoie à un orchestrateur de plus bas niveau, puis met à jour les sonde du SDC pour monitorer la nouvelle politique.

e/ le déploiement des services pour implémenter la politique de sécurité sur le SDC se fait comme décrit dans la section « Résilience intra-domaine *des services d'orchestration et de sécurité* » .

En parallèle, le SASO surveille l'état de la politique implémentée sur les nœuds du SDC via la sonde installée sur ces derniers. Chaque nouvel état implémenté sur les nœuds du SDC est détecté par l'API et provoque une nouvelle action du contrôleur pour assurer sa résilience.

Cette nouvelle boucle de contrôle peut avoir plusieurs conséquences selon la différence entre l'enrichissement du SASOD qui est transmis à l'orchestrateur de services du SDC et l'état réel des services sur le SDC :

- reconfigurer les services de sécurité ;

- redéployer les services de sécurité ;

- désinstaller les services de sécurité

- déployer un nouveau service de sécurité.

Élection intra-domaine de l'orchestrateur maître d'un domaine

Pour le SASO comme pour les orchestrateurs de plus bas niveau, un seul orchestrateur de chaque type dans chaque cluster est actif à la fois.

En exploitant la fonctionnalité de réplication du plan de contrôle de chaque cluster décrit à la section « Résilience intra-domaine pour le plan de contrôle » plus haut, la résilience de ces orchestrateurs est assurée en appliquant une réplication de un (1) sur tous les nœuds.

La sélection de ce nœud par le plan de contrôle de chaque cluster est régie par le même mécanisme que défini précédemment pour la sélection de nœuds dans le cadre de la résilience intra-domaine du plan de données. En effet, le plan de contrôle d'un cluster connait l'état des nœuds à tout moment (cf section « Résilience d'un cluster »). Il peut donc se baser sur ces critères afin d'élire un nœud pour le déploiement d'un service d'orchestration (SASO ou VIM).

Si aucun des nœuds n'est disponible, la requête de déploiement d'un orchestrateur est rejetée.

Exemple : Déploiement d'un service de communication chiffrée de bout-en-bout dans des bulles tactiques de communication

Le but, dans cet exemple de réalisation, est de sécuriser les communications du plan de données entre deux points d'accès de deux domaines, domaines qu'on appellera « domaine A » et « domaine B », représentés par des bulles de communication. Le protocole de communication sera TCP et le chiffrement sera assuré par le protocole de sécurité TLS. Chaque bulle représente un domaine et est constituée de plusieurs nœuds de calcul qui communiquent entre eux.

Dans les conditions initiales de l'exemple, aucune communication n'a lieu entre les deux domaines sur un plan de données, mais chaque domaine possède des nœuds de calcul, un contrôleur de fédération, un SASO et des orchestrateurs métiers fonctionnels (réseau, applications). La communication via le plan de contrôle n'est possible qu'entre le gestionnaire de fédération et les contrôleurs de fédération de chaque domaine, mais aucune communication n'a lieu entre les deux domaines sur le plan de contrôle.

L'expression du besoin sur cet exemple se traduit, via le gestionnaire de fédération de la couche de gestion de service, en la génération d'un SOD qui décrit les domaines A et B, le service de communication TCP de bout-en-bout (i.e. via les domaines A et B) et une autorité de certification pour la fédération, ainsi qu'une SSLA, qui décrit la capacité de chiffrement TLS sur le service.

On considèrera ici que le domaine maître est le domaine A, désigné dans le SOD. Le contrôleur de fédération maître initial est donc le contrôleur de fédération du domaine A. Le SASO maître initial est donc le SASO du domaine A.

Le gestionnaire de fédération transfère au contrôleur de fédération maître (domaine A) le SOD et la SSLA via le plan de contrôle. Le contrôleur de fédération maître créé alors une communication avec le contrôleur de fédération du domaine B à travers le plan de contrôle de la fédération afin qu'ils constituent une fédération de domaines. Le contrôleur de fédération du domaine B communique le succès de l'adhésion à la fédération au contrôleur de fédération maître, qui peut donc attester du succès de la création de la fédération à la couche 11 de gestion de service E2E (en anglais « End-To-End »).

Le gestionnaire de politique de sécurité du domaine A enrichit le SOD, à partir du besoin de sécurité TLS exprimé par la SSLA, avec une politique de sécurité propre à la fédération du service associé, afin de générer un SASOD. Le SASOD comprend donc à la fois la description en topologie du service TCP de bout-en-bout dans la fédération, mais aussi la description de la politique de sécurité assurant le chiffrement TLS dans la fédération, sur ce service.

Le contrôleur de fédération maître transmet le SASOD au SASO de son domaine (domaine A) qui est alors le SASO maître de la fédération. Le SASO maître transmet ce SASOD au SASO du domaine B à travers le plan de contrôle de la fédération.

Chaque SASO contacte son catalogue de fonctions, alors administré par son domaine avec ses propres fonctions de sécurité et métiers virtuelles. Les fonctions de sécurité et métiers sont sélectionnées en fonction du SASOD dans chaque domaine et sont rattachées au service et à la politique de sécurité à implémenter. Dans notre exemple, les SASOs de chaque domaine sélectionnent des fonctions virtuelles de réseau, d'IT (infrastructure) et d'application afin d'établir un canal de communication dédié entre un client TCP du domaine A et un serveur TCP du domaine B et des fonctions de sécurité pour assurer la protection en confidentialité et intégrité/authenticité - avec authentification mutuelle - du canal de communication.

Les SASOD sont traduits en fonction des fonctions sélectionnées dans le catalogue par des modules applicatifs du SASO en une implémentation spécifique pour les orchestrateurs métiers (réseau, IT (infrastructure), applicatifs) dans son domaine. Le déploiement des fonctions virtuelles est alors délégué à ces derniers, qui attestent en dernier lieu du succès du déploiement des fonctions sur les nœuds de calcul de chaque bulle. Le SASO du domaine B peut alors attester auprès du SASO maître du domaine A que la communication chiffrée est possible sur son domaine via le plan de communication dédié. Le SASO maître peut par la suite attester que l'orchestration de la communication chiffrée de bout-en-bout est un succès auprès de la fédération, lorsque tous les SASO ont attesté du succès de leur propre déploiement.

Dans les conditions de vie de cet exemple, la communication est chiffrée de bout-en-bout pour le service déployé entre les domaines A et B. Elle est aussi résiliée dynamiquement.

La conformité du fonctionnement du service sur chaque domaine est contrôlée par le SASO du domaine et en cas de détection de non-conformité, le SASO dudit domaine en notifie le SASO du domaine maître, ce qui déclenche le cas échéant une modification de déploiement de ladite implémentation du SASOD ou une modification d'implémentation du SASOD.

Par exemple :

Dans le cas d'une panne d'un des nœuds de calcul appartenant au domaine B, la résilience des fonctions implémentant le service et sa sécurité est assurée par les orchestrateurs métier du domaine B. Ils alertent en même temps le SASO du domaine B et fonctionnent en quorum avec ce dernier pour réparer la panne. Le SASO du domaine B alerte aussi le SASO maître du domaine A dès que c'est possible, afin que les SASO puissent fonctionner en quorum pour réparer la panne de bout-en-bout si cela est nécessaire.

Dans le cas d'une violation de politique de sécurité, par exemple lorsque les algorithmes de chiffrement sont modifiés sur le domaine B, le SASO du domaine B détecte et calcule en temps réel les déviations vis-à-vis de la politique. Cela se fait entre les données remontées par les orchestrateurs métiers vis-à-vis des fonctions déployées et la politique contenue dans le SASOD à appliquer normalement sur le domaine. Dans notre cas, le SASO du domaine B ordonne aux orchestrateurs métiers, dès la déviation détectée, de réappliquer la bonne configuration TLS (les bons algorithmes de chiffrement, la bonne version de protocole, etc.) sur son domaine. Le SASO du domaine B alerte aussi le SASO maître du domaine A dès que c'est possible, afin que les SASO puissent fonctionner en quorum pour réparer de bout-en-bout la violation de politique de sécurité si cela est nécessaire.

Dans le cas d'une panne d'un nœud hébergeant le SASO ou le contrôleur de fédération, dans le domaine B par exemple, sa résilience est assurée par sa réplication sur tous les nœuds de calcul du domaine B, mais un seul SASO et un seul contrôleur de fédération sont actifs à la fois pour les tâches d'orchestration et de fédération dans le domaine B. Dans le cas de panne d'un des nœuds actifs, les réplicas des autres nœuds détectent la panne et agissent en quorum pour élire un nouveau SASO ou contrôleur de fédération actif dans le domaine B, en activant ses fonctions d'orchestration ou de fédération. Le nouveau SASO ou contrôleur de fédération actif contacte le SASO ou le contrôleur de fédération maître du domaine A pour les mettre à jour.

Dans le cas d'une panne du nœud hébergeant le SASO maître dans le domaine A, sa résilience est assurée par le même processus décrit ci-dessus, ainsi que pour sa fonction maîtresse.

Dans le cas d'une panne du nœud hébergeant le contrôleur de fédération maître dans le domaine A, le même processus est activé vis-à-vis de la fonction maîtresse du contrôleur de fédération, mais à travers tous les domaines. Ainsi, les fonctions maîtresses des SASO et contrôleur de fédération sont transitoires dans une fédération et peuvent changer de domaine en cas de défaillance. Dans notre cas, la fonction de fédération du contrôleur de fédération dans le domaine A est d'abord restaurée, sur un nouveau nœud du domaine A. Ensuite, si le nouveau contrôleur de fédération maître est élu dans le domaine B, le SASO du domaine B devient le nouveau SASO maître de la fédération. Enfin, les nouveaux contrôleurs de fédération et SASO maîtres dans le domaine B informent le SASO et le contrôleur de fédération du domaine A pour les mettre à jour.

Dans le pire cas où le domaine A entier est défaillant (autrement dit tous les nœuds du domaine A le sont), les contrôleurs de fédération des autres domaines - ici le domaine B - le détectent, et le domaine B prend le rôle de domaine maître. S'il y a un troisième domaine C, un protocole d'élection du nouveau domaine maître est déclenché entre B et C. Les domaines dans une fédération s'envoient des signaux de vie entre contrôleurs de fédération selon un protocole basé sur un algorithme ou protocole de bavardage (gossip protocol or gossip algorithm en anglais), tel que ceux décrits dans Gossip-based Protocols for Large-scale Distributed Systems. Márk Jelasity, 2013. Lorsqu'un domaine est injoignable pendant un certain temps, on le considère comme perdu.

Dans tous les cas où il y a un changement de domaine maître pour une fédération donnée, le nouveau domaine maître doit informer la couche de gestion de service E2E du changement.

Dans cette application de l'invention, par exemple :

- les besoins de sécurité sont définis par des SSLA ;

- les descripteurs d'orchestration de services (SOD et SASOD) sont libellés en TOSCA ;

- les fonctionnalités et services (orchestration, applications, sécurité, réseau) sont des objets logiciels par exemple de type « conteneurs », i.e.de type pack logiciel renfermant un code exécutable distribuant une application avec tous les éléments dont elle a besoin pour fonctionner : fichiers source, fichiers de configuration, librairies, dépendances etc ;

- les nœuds des SOMC et SDC sont virtualisés en VMs (« Virtual Machine ») ARM64 ou x86_64 ;

- les protocoles de communication inter-domaines et entre le couche de gestion de services et les fédérations sont assurés en TCP, et la sécurité des communications sera assurée par du TLS

- les APIs de communication entre orchestrateurs sont implémentées en REST ;

- la cryptographie asymétrique utilisée est RSA 4096-bit ou ECDSA 384-bit ou autres algorithmes post-quantiques suivant les recommandations de l'ANSSI ou du NIST (à défaut) en vigueur ;

- la résilience des données des SOMC et SDC sont assurés par le protocole RAFT ;

- les clés de chiffrement symétriques utilisées sont des clés AES-256.

La présente invention propose ainsi un procédé (et un protocole) d'interaction entre l'orchestrateur de sécurité et d'autres niveaux d'orchestration en intra et inter-domaines. Elle est par exemple mise en œuvre dans les réseaux 5G ou 6G notamment. L'orchestration est décentralisée grâce à la mise en œuvre d'une fédération. La solution d'orchestration de sécurité décrite est résiliente en intra et inter-domaine. Elle permet une automatisation et une élasticité propre à la sécurité qui a les mêmes besoins d'automatisation et d'élasticité que les fonctions réseau et les applications (softwarisation, virtualisation, cloudification, même rythme d'évolution).

La sécurité est injectée au plus tôt dans le processus d'orchestration au niveau de tous les domaines.

L'orchestration de sécurité est implémentée de bout-en-bout en fonction des SSLAs.

La solution s'appuie sur un enrichissement de descripteurs de topologie pour l'orchestration avec les politiques de sécurité (par exemple en utilisant TOSCA), ainsi qu'une sélection dynamique et distribuée de fonctions de sécurité.

**Revendications**

1. Procédé d'orchestration multi-domaine de la sécurité par un système d'orchestration (10) d'une plateforme (14) de mise en œuvre de services comprenant une pluralité de domaines de ressources de calcul, de réseau ou de stockage pour la mise en œuvre des services ;

à chaque domaine étant associés :

- un orchestrateur de services orienté sécurité, dit SASO (122), autonome, effectuant, dans ledit domaine, une orchestration des services et une orchestration de la sécurité,
- un catalogue des fonctions (65), y compris de sécurité, déployables dans le domaine,
- un contrôleur de fédération (120),
- un gestionnaire de politique de sécurité (121),

selon lequel chaque service à orchestrer est associé à un accord contractuel numérique de niveau de sécurité, dit SSLA, et à un descripteur de topologie de l'orchestration dudit service, nommée SOD, le procédé comprend les étapes suivantes mises en œuvre par un module de gestion de services du système d'orchestration :

en fonction de la SSLA et du SOD associés au service, sélection de certains des domaines pour la mise en œuvre du service sélectivement à partir desdits domaines sélectionnés, déclenchement de la création automatique d'une fédération des domaines sélectionnés via les contrôleurs de fédération des domaines sélectionnés, et sélection dynamique, parmi les domaines de la fédération, d'un domaine maître de ladite fédération ;
fourniture du SOD et de la SSLA au gestionnaire de politique de sécurité du domaine maitre ;
selon lequel le gestionnaire de politique de sécurité (121) du domaine maitre crée ensuite automatiquement, en fonction desdits SOD et SSLA, un descripteur de topologie d'orchestration du service augmenté avec la sécurité, nommé SASOD, décrivant la topologie de bout en bout du service déclinée sur les domaines de la fédération, y compris la SSLA associée au service et le transmet au SASO du domaine maître de la fédération, qui transmet à son tour le SASOD au SASO de chaque autre domaine de la fédération créée pour ledit service ;
dans chaque domaine :

- le SASO (122) de chaque domaine de la fédération enrichit ledit SASOD, en fonction du catalogue de fonctions, y compris de sécurité, dudit domaine, en une implémentation d'orchestration du service, spécifique au domaine et respectant la SSLA associée au service ;
- l'orchestration du service conformément à la SSLA sur le domaine est effectuée en fonction de ladite implémentation d'orchestration.

2. Procédé d'orchestration multi-domaine de la sécurité selon la revendication 1, selon lequel dans au moins un des domaines de la fédération, une partie au moins de ladite implémentation d'orchestration est distribuée par le SASO (122) dudit domaine à un orchestrateur du domaine distinct du SASO (122) et dédié à un aspect parmi {réseau, applicatifs, plateforme} ; le déploiement du service conformément à la SSLA est effectué en fonction de ladite implémentation d'orchestration par au moins ledit orchestrateur du domaine distinct du SASO.

3. Procédé d'orchestration multi-domaine de la sécurité selon l'une quelconque des revendications précédentes, mettant en œuvre au moins l'une des dispositions parmi les suivantes :

- dans au moins un des domaines de la fédération, le SASO (122) est dupliqué sur une pluralité de nœuds hébergeant les ressources, un seul desdits SASOs étant actif à la fois dans ledit domaine, un autre desdits SASOs étant activé dans ledit domaine en cas de panne du SASO jusqu'alors actif ;
- dans au moins un des domaines de la fédération dans lequel une partie au moins de ladite implémentation d'orchestration est distribuée par le SASO dudit domaine à un orchestrateur du domaine distinct du SASO, ledit orchestrateur du domaine distinct du SASO est dupliqué sur une pluralité de nœuds hébergeant les ressources, un seul desdits orchestrateurs étant actif à la fois dans ledit domaine, un autre desdits orchestrateurs étant activé dans ledit domaine en cas de panne de l'orchestrateur jusqu'alors actif ;
- dans au moins un des domaines de la fédération, le contrôleur de fédération est dupliqué sur une pluralité de nœuds hébergeant les ressources, un seul desdits contrôleurs de fédération étant actif à la fois dans ledit domaine, un autre desdits contrôleur(s) de fédération étant activé dans ledit domaine en cas de panne du contrôleur de fédération jusqu'alors actif.

4. Procédé d'orchestration multi-domaine de la sécurité selon la revendication précédente, selon lequel ledit autre élément d'un type donné parmi SASO, orchestrateur du domaine distinct du SASO et contrôleur de fédération, qui est à activer, suite à une panne de l'élément du même type actif jusqu'alors au sein du même domaine, est identifié, parmi les éléments du même type, par un mécanisme d'élection dynamique et distribuée.

**5.** Procédé d'orchestration multi-domaine de la sécurité selon l'une quelconque des revendications précédentes, mettant en œuvre au moins l'une des dispositions parmi les suivantes :

- suite à la détection qu'un domaine de la fédération est défaillant, sélection d'un autre domaine dans la pluralité de domaines pour remplacer, dans la fédération, le domaine défaillant, pour la mise en œuvre du service sélectivement à partir desdits domaines sélectionnés ;
- suite à la détection que le domaine maître de la fédération est défaillant, mise en œuvre d'un mécanisme d'élection dynamique et distribuée d'un nouveau domaine maître parmi les autres domaines de la fédération.

**6.** Procédé d'orchestration multi-domaine de la sécurité selon l'une quelconque des revendications précédentes, selon lequel la conformité du niveau de sécurité du fonctionnement du service par rapport au SSLA sur chaque domaine est contrôlée par le SASO dudit domaine et en cas de détection de non-conformité, le SASO dudit domaine en notifie le SASO du domaine maître, ce qui déclenche le cas échéant au moins l'une des dispositions suivantes :

- modification de l'orchestration de ladite implémentation du SASOD ;
- modification d'implémentation du SASOD.

**7.** Système d'orchestration (10) pour une plateforme (14) de mise en œuvre de services comprenant une pluralité de domaines de ressources de calcul, de réseau ou de stockage pour la mise en œuvre des services et un (12), comportant associé à chaque domaine :

- un orchestrateur de services orienté sécurité, dit SASO (122), autonome, effectuant, dans ledit domaine, une orchestration des services et une orchestration de la sécurité,
- un catalogue des fonctions (65), y compris de sécurité, déployables dans le domaine,
- un contrôleur de fédération (120),
- un gestionnaire de politique de sécurité (121),

dans lequel chaque service à orchestrer est associé à un accord contractuel numérique de niveau de sécurité, dit SSLA, et à un descripteur de topologie de l'orchestration dudit service, nommée SOD, dans lequel un module de gestion de services du système d'orchestration (11) est adapté pour, en fonction de la SSLA et du SOD associés au service, sélectionner certains des domaines pour la mise en œuvre du service sélectivement à partir desdits domaines sélectionnés, pour déclencher la création automatique d'une fédération des domaines sélectionnés via les contrôleurs de fédération des domaines sélectionnés, et pour sélectionner dynamiquement, parmi les domaines de la fédération, un domaine maître de ladite fédération ;
dans lequel le module de gestion de services (11) du système d'orchestration est adapté pour, fournir le SOD et la SSLA au gestionnaire de politique de sécurité du domaine maitre ;
dans lequel le gestionnaire de politique de sécurité du domaine maître est adapté pour créer ensuite automatiquement, en fonction desdits SOD et SSLA, un descripteur de topologie d'orchestration du service augmenté avec la sécurité, nommé SASOD, décrivant la topologie de bout en bout du service déclinée sur les domaines de la fédération, y compris la SSLA associée au service et pour le transmettre au SASO du domaine maître de la fédération, qui est adapté pour alors transmettre à son tour le SASOD au SASO de chaque autre domaine de la fédération créée pour ledit service ;
dans lequel pour chaque chaque domaine :

- le SASO de chaque domaine de la fédération est adapté pour enrichir ledit SASOD, en fonction du catalogue de fonctions, y compris de sécurité, dudit domaine, en une implémentation d'orchestration du service, spécifique au domaine et respectant la SSLA associée au service ;

et dans lequel l'orchestration du service conformément à la SSLA sur le domaine est effectuée en fonction de ladite implémentation d'orchestration.

**8.** Système d'orchestration (10) selon la revendication 7, dans lequel dans au moins un des domaines de la fédération, une partie au moins de ladite implémentation d'orchestration est distribuée par le SASO dudit domaine à un orchestrateur du domaine distinct du SASO et dédié à un aspect parmi {réseau, applicatifs, plateforme} ;
dans lequel le déploiement du service conformément à la SSLA est effectué en fonction de ladite implémentation d'orchestration par au moins ledit orchestrateur du domaine distinct du SASO.

**9.** Système d'orchestration (10) selon la revendication 7 ou 8, dans lequel :

- dans au moins un des domaines de la fédération, le SASO est dupliqué sur une pluralité de nœuds hébergeant les ressources, un seul desdits SASOs étant actif à la fois dans ledit domaine, un autre desdits SASOs étant activé dans ledit domaine en cas de panne du SASO jusqu'alors actif ; et/ou

- dans au moins un des domaines de la fédération dans lequel une partie au moins de ladite implémentation d'orchestration est distribuée par le SASO dudit domaine à un orchestrateur du domaine distinct du SASO, ledit orchestrateur du domaine distinct du SASO est dupliqué sur une pluralité de nœuds hébergeant les ressources, un seul desdits orchestrateurs étant actif à la fois dans ledit domaine, un autre desdits orchestrateurs étant activé dans ledit domaine en cas de panne de l'orchestrateur jusqu'alors actif ; et/ou

- dans au moins un des domaines de la fédération, le contrôleur de fédération est dupliqué sur une pluralité de nœuds hébergeant les ressources, un seul desdits contrôleurs de fédération étant actif à la fois dans ledit domaine, un autre desdits contrôleur(s) de fédération étant activé dans ledit domaine en cas de panne du contrôleur de fédération jusqu'alors actif.

**10.** Système d'orchestration (10) selon la revendication précédente, dans lequel ledit autre élément d'un type donné parmi SASO, orchestrateur du domaine distinct du SASO et contrôleur de fédération, qui est à activer, suite à une panne de l'élément du même type actif jusqu'alors au sein du même domaine, est identifié, parmi les éléments du même type, par un mécanisme d'élection dynamique et distribuée.

FIG.1

FIG.2

FIG.3

FIG.4

# EP 4 757 250 A1

Europäisches Patentamt

European Patent Office

Office européen des brevets

## RAPPORT DE RECHERCHE EUROPEENNE

Numéro de la demande

EP 25 22 0985

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | ASENSIO-GARRIGA RODRIGO ET AL: "A Multi-stakeholder Cloud-continuum framework for 6G Networks security & service management", 2023 IEEE 12TH INTERNATIONAL CONFERENCE ON CLOUD NETWORKING (CLOUDNET), IEEE, 1 novembre 2023 (2023-11-01), pages 466-471, XP034584938, DOI: 10.1109/CLOUDNET59005.2023.10490020 * abrégé; figures 1,2 * * page 467, colonne de droite, ligne 6 - page 471, colonne de droite, ligne 14 * ----- | 1-10 | INV. H04L9/40 G06F9/50 H04L67/51 H04L41/0806 H04L41/0894 H04L41/122 H04L41/5041  ADD. H04L41/40 H04L41/0895 |
| A | YOUNGWOO JUNG ETRI KOREA (REPUBLIC OF): "Draft new Recommendation ITU-T Y.mc-arch: "Cloud computing - Functional architecture for multi-cloud";TD391/WP2", ITU-T DRAFT; STUDY PERIOD 2021-2024; STUDY GROUP 13; SERIES TD391/WP2, INTERNATIONAL TELECOMMUNICATION UNION, GENEVA ; CH , vol. 18/13 24 juillet 2024 (2024-07-24), pages 1-24, XP044399084, Extrait de l'Internet: URL:https://www-api.itu.int/ifa/t/2022/sg1 3/docs/240715/td/ties/wp2/T22-SG13-240715- TD-WP2-0391!!MSW-E.docx [extrait le 2024-07-24] * page 5 - page 13 * ----- | 1-10 | |
| A | EP 4 407 488 A1 (VMWARE LLC [US]) 31 juillet 2024 (2024-07-31) * abrégé; figure 1 * * alinéa [0002] - alinéa [0043] * * alinéa [0047] - alinéa [0221] * ----- | 1-10 | |

| | DOMAINES TECHNIQUES RECHERCHES (IPC) |
|---|---|
| | H04L G06F |

Le présent rapport a été établi pour toutes les revendications

| Lieu de la recherche | Date d'achèvement de la recherche | Examinateur |
|---|---|---|
| Munich | 25 mars 2026 | Lebas, Yves |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 22 0985

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-03-2026

| Document brevet cité au rapport de recherche | Date de publication | Membre(s) de la famille de brevet(s) | Date de publication |
|---|---|---|---|
| EP 4407488 A1 | 31-07-2024 | AUCUN | |

EPO FORM P0460

Pour tout renseignement concernant cette annexe : voir Journal Officiel de l'Office européen des brevets, No.12/82

**EP 4 757 250 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **V. CASOLA** ; **A. D. BENEDICTIS** ; **M. RAK** ; **U. VILLANO**. SLA-Based Secure Cloud Application Development: The SPECS Framework. *17th International Symposium on Symbolic and Numeric Algorithms for Scientific Computing (SYNASC)*, 2015, 337-344

- **DIEGO ONGARO** ; **JOHN OUSTERHOUT**. *Proceedings of the 2014 USENIX conference on USENIX Annual Technical Conference*, 2014